(19) Europäisches Patentamt
European Patent Office
Office européen des brevets

(11) **EP 1 694 134 B1**

(12) **EUROPEAN PATENT SPECIFICATION**

(45) Date of publication and mention
of the grant of the patent:
**07.10.2009 Bulletin 2009/41**

(51) Int Cl.:
*A23G 3/00* (2006.01)       *A23G 3/20* (2006.01)
*A23G 9/00* (2006.01)       *A23G 9/04* (2006.01)
*A23L 1/0524* (2006.01)     *C08L 1/02* (2006.01)
*C08L 1/08* (2006.01)

(21) Application number: **04820419.2**

(22) Date of filing: **06.12.2004**

(86) International application number:
**PCT/EP2004/013870**

(87) International publication number:
**WO 2005/058054 (30.06.2005 Gazette 2005/26)**

(54) **CONFECTIONERY PRODUCT**

SÜSSWARE

CONFISERIE

(84) Designated Contracting States:
**AT BE BG CH CY CZ DE DK EE ES FI FR GB GR HU IE IS IT LI LT LU MC NL PL PT RO SE SI SK TR**

(30) Priority: **18.12.2003 EP 03257994**

(43) Date of publication of application:
**30.08.2006 Bulletin 2006/35**

(73) Proprietors:
• **Unilever PLC**
**London**
**EC4Y 0DY (GB)**
Designated Contracting States:
**CY GB IE**
• **Unilever N.V.**
**3013 AL Rotterdam (NL)**
Designated Contracting States:
**AT BE BG CH CZ DE DK EE ES FI FR GR HU IS IT LI LT LU MC NL PL**

(72) Inventors:
• **BIRKETT, Neil Richard**
**Cambridge,**
**Cambridgeshire CB4 1JH (GB)**

• **COX, Andrew Richard,**
**Unilever R & D Colworth**
**Bedford,**
**Bedfordshire MK44 1LQ (GB)**
• **KEENAN, Robert Daniel,**
**Unilever R & D Colworth**
**Bedford,**
**Bedfordshire MK44 1LQ (GB)**
• **WATTS, Karen Margaret,**
**Unilever R & D Colworth**
**Bedford,**
**Bedfordshire MK44 1LQ (GB)**

(74) Representative: **Hugot, Alain**
**Unilever Patent Group**
**Colworth House**
**Sharnbrook**
**Bedford, MK44 1LQ (GB)**

(56) References cited:
EP-A- 0 191 487          WO-A-00/40098
GB-A- 1 050 213          US-A- 2 263 483
US-A- 3 623 889          US-A- 3 914 441
US-A- 4 505 943          US-A- 5 800 855

**Description**

Field of the invention

The present invention relates to premixes for use in the manufacture of aerated confectionery products, especially chilled or frozen confectionery products such as ice cream.

Background to the invention

A significant market exists for freshly made ice cream, consumed either immediately or soon after preparation, e.g. in a retail outlet/kiosk environment from a vending machine, or at home. An important element in ice cream production is the incorporation of air which gives the product proper body and texture. This incorporated air is termed 'overrun' and is defined as the volume of ice cream obtained in excess of the volume of the mix, usually expressed as a percentage.
This air is usually incorporated by injection during the freezing and whipping process. However, the equipment required is costly and therefore only really commercially viable for large-scale manufacture, or in locations that have a high throughput of customers.
On the other hand, existing means for making ice cream or other aerated confectionery products on a small scale, such as ice cream makers, do not provide a satisfactory overrun and/or require time-consuming mechanical techniques to introduce air into the confectionery product.
WO-A-00/40098 discloses ice creams containing a pectin composition as a fat replacer and emulsifier.
US-A-5 800 855 discloses a frozen cheesecake ice cream comprising a stabilizing system comprising a base, such as sodium carbonate.
US-A-4 505 943 discloses a process for making a freeze-thaw stable frozen whipped topping, which process comprises controlling the pH of the topping ingredient admixture.
US-A-2 263 483 discloses food stabilizing compositions comprising finely divided seed coatings of the Plantago family and a solid edible buffering substance.
US-A-3 623 889 discloses confections containing an effervescent material.
GB-A-1 050 213 discloses a process for preparing a carbonated frozen dessert-containing beverage.
Accordingly it is an object of the present invention to provide a method of making aerated confectionery products, such as ice cream, which have the desired level of overrun, and which can be prepared instantly and hygienically without the use of complex mechanical methods.

Summary of the invention

The present invention is based on the use of dry premixes which comprise a carbon dioxide generating system including an acid and a carbonate. When water is added to the premix, carbon dioxide is produced which introduces the overrun into the product. Other ingredients are included to provide stability to the aerated product over a reasonable period of time, e.g. the time needed to freeze the aerated product in the case of ice cream and other frozen confections.
Carbon dioxide generating systems have been used previously in a number of medicinal, food and beverage products including soluble tablets and ambient confectionery products where they are used to dissolve/disperse ingredients and/or to generate a fizzing sensation. The resulting gas is simply liberated and not retained within the product.
Another problem with carbon dioxide generating systems is that they typically use acid-base chemistry to generate the carbon dioxide by reaction of a weak acid with a carbonate or bicarbonate. However, these systems often lead to a product that is acidic and fizzy which if applied to aerated confectionery products such as ice cream would be undesirable. We have found that by careful choice of the type and amount of acid, it is possible to obtain substantial levels of overrun whilst maintaining the pH above an acceptable level.
Accordingly, the present invention provides a dry confectionery premix for preparing an aerated confectionery product which premix comprises:

(i) a carbon dioxide generating composition comprising an acid selected from ascorbic acid, succinic acid and mixtures thereof, and a carbonate wherein the molar ratio of the amount of acid to carbonate present in the carbon dioxide generating composition is from about 1:2 to about 2:1; and
(ii) a stabiliser system;

such that when the premix is mixed with water to give a final solids content of at least about 20 wt%, an aerated confectionery product is formed, in the absence of mechanical aeration, having an overrun of at least about 30% and a pH of greater than about 5.4.
Preferably the premix is a powder.

In another aspect, the present invention provides the use of a premix of the invention in a method of preparing a confectionery product having a solids content of at least about 20 wt%, an overrun of at least about 30% and a pH of greater than about 5.4.

The present invention also provides a method of preparing a confectionery product which method comprises admixing a premix of the invention with an aqueous liquid to give a final solids content of at least about 20 wt% to form an aerated confectionery product which, in the absence of mechanical aeration, has an overrun of at least about 30% and a pH of greater than about 5.4.

In one embodiment, the method further comprises chilling the confectionery product to a temperature of below about 6°C.

In another embodiment, the method further comprises freezing the confectionery product to a temperature of below about -6°C.

In a preferred embodiment, the confectionery product is a chilled or frozen confectionery product, such as ice cream.

Detailed description of the invention

Unless defined otherwise, all technical and scientific terms used herein have the same meaning as commonly understood by one of ordinary skill in the art (e.g. in chilled confectionery/frozen confectionery manufacture, and chemistry). Definitions and descriptions of various terms and techniques used in chilled/frozen confectionery manufacture are found in Ice Cream, 4th Edition, Arbuckle (1986), Van Nostrand Reinhold Company, New York, NY.

The premixes of the invention are used to make confectionery products, especially chilled or frozen confectionery products such as ice cream, toppings and mousses. Consequently, the bulk of the components of a dry premix of the invention are ingredients typically used in the manufacture of those confectionery products such as a fat source, a protein source, a carbohydrate source, stabilisers, emulsifiers and flavourings. Fat sources include vegetable oil and milk fat. Carbohydrate sources include complex carbohydrate such as starch, and sugars such as sucrose, glucose and lactose. Protein sources include whey and milk solids non-fat. Stabilisers are typically selected from gums, agar, alginates and derivatives thereof, gelatin, pectin, lecithin, sodium carboxymethylcellulose, carrageenan, furcelleran and mixtures thereof.

The term "dry" in the context of the present invention has its usual meaning of 'free from water'. However, it will be appreciated that the premix of the invention may contain a small amount of water, such as less then 5 wt% water, whilst still being essentially 'dry'. The premix is preferably in particulate form, for example in the form of a powder or granules.

The premixes of the invention include a carbon dioxide generating composition comprising an acid and a carbonate. The acid is ascorbic acid, succinic acid, or a mixture thereof. These acids are solid at standard temperature and pressure and are weak acids. They are diprotic acids having a first pKa of greater than about 3 and a second pKa of greater than about 4.5. Preferably the second pKa is greater than about 5, 6 or 7. These acids are food grade organic acids.

The carbonate can be any suitable carbonate or bicarbonate with any suitable cation, provided that the carbonate is soluble in an aqueous liquid. Examples of suitable cations include metal ions such as potassium and sodium. Mixtures of two or more carbonates may be used.

The carbonate is present in the premix such that the amount in the final product when made up with an aqueous liquid is from about 0.5 wt% to about 3 wt% of the final product, preferably from about 1 wt% to 2 wt%. Consequently, based on a final solids content of from 20 wt% to 60 wt%, the amount of carbonate present in the premix is from about 0.833 wt% to about 15 wt%. Sufficient carbonate is required to generate the desired overrun. However, the pretence of excessive amounts of carbonates can impart an unpleasant taste to the product. The molar ratio of acid to carbonate is selected so as have sufficient acid to react with the carbonate present in the premix and generate carbon dioxide to provide overrun. However, an excess of acid will result in too low a pH. The molar ratio of the amount of acid to base present in the carbon dioxide generating composition is therefore from about 1:2 to about 2:1.

The type and amount of acid and carbonate are selected such that when the premix is added to water, the resulting composition has a pH of greater than about 5.4 and the amount of overrun is at least 30%, without using mechanical methods to introduce overrun, i.e. the overrun attributable to the carbon dioxide generating system is at least 30%.

In a preferred embodiment, the pH when measured 30 mins after addition to the dry premix of an aqueous liquid, for example water, is greater than about 5.6, more preferably greater than about 5.8 or 6.0. Preferably, the pH is less than about 8.5, more preferably less than about 8.0 or 7.5. The pH is measured at 10°C.

The overrun is preferably at least 50%, 70% or 80%, most preferably at least 90% or 100%. The overrun is typically less than 150%. The desired overrun is preferably maintained for at least 30 mins after addition of the dry premix to an aqueous liquid. In the case of frozen confectionery products which are to be frozen quiescently at -18°C, it is preferred that the desired overrun is maintained for at least 2 hours, more preferably at least 3 or 4 hours to allow sufficient time to freeze the product whilst maintaining the desired overrun.

The overrun is maintained and stabilised by controlling the rheology of the product. If the initial viscosity is too high, this would impede aeration, leading to lower overrun. If the initial viscosity is too low, the gas generated can escape, leading to low overrun.

The rheology of the aerated product can be controlled by choice of the stabilising system. Typical food stabilisers act to viscosify and/or gel the aqueous phase, thus reducing the rate of bubble coalescence, disproportionation and creaming. Food stabilisers are typically selected from gums, agar, alginates and derivatives thereof, gelatin, pectin, lecithin, sodium carboxymethylcellulose, carrageenan, furcelleran. Mixtures of stabilisers can be used. Preferably, the stabiliser is used in combination with a fat based whipping agent, or topping base. These act as a source of fat in the aerated product, which is good for texture and taste. They also act to stabilise the air phase. Examples of commercial fat based whipping agents or topping bases are: Myvatex Mighty Cream and Admul Whippable Fat Powder 2413 (Quest International Ltd), and Instant Topping Base Series DP, e.g. DP73, DP76, (DMV International).

The rheology of the continuous phase produced by pre-mixes can be measured in the following way:

A T.R. Instruments AR 1000-N rheometer is used to measure the sample rheology. A 40 mm acrylic parallel plate geometry (with attached abrasive paper) is used and the gap is set to 1000 $\mu$m. The correct proportions of powder and water to make 10 g of product are weighed out separately. The acid and base are omitted from the sample, since only the rheology of the mix is required, not that of the entire foaming product. The powder and water are mixed in a 25 cm$^3$ glass beaker by adding the water to the powder and stirred for one minute by hand with a metal spatula. A small amount of the sample is loaded onto a rheometer. The measurement started two minutes after the powder and water are mixed. A solvent trap is used to prevent the sample drying out during the experiment.

Each formulation is tested with a flow procedure and an oscillation procedure, detailed below. These measurement procedures determine the viscosity of the mix, and the viscous and elastic response of the mix.

Flow Procedure:

Each sample is subjected to a controlled shear rate of 0.5 s$^{-1}$ for 30 minutes. The temperature is kept constant at 20 °C throughout the experiment and a solvent trap was used. This procedure determines the viscosity of the mix as a function of time.

Oscillation Procedure:

Each sample is subjected to a controlled stress of 0.5 Pa and an oscillation frequency of 1 Hz for 30 minutes. The temperature is kept constant at 20°C throughout the experiment and a solvent trap is used. Data are plotted in terms of the storage (G') and loss (G") moduli as a function of time, where:

$$G' = G^* \cos \theta$$

$$G'' = G^* \sin \theta$$

$\theta$ is the measure of phase angle between applied stress and strain response, and
$G^*$ is the instantaneous ratio of stress amplitude to strain amplitude.

From these experiments, we determined that the initial viscosity is preferably from 1 to 100 Pa s (Pascal seconds). After mixing (e.g. 3 minutes), the viscosity has preferably increased and is from 10 to 10000 Pa s. Initially, G' and G" are both preferably from 1 to 100 Pa, and G' is less than G". After mixing (e.g. 3 minutes), G' and G" are both preferably from 10 to 1000 Pa, and G' is greater than G".

All viscosity and modulus measurements are taken at standard temperature and pressure.

The premixes of the invention can be used to make confectionery products, especially chilled or frozen confectionery products, by combining the premix with an aqueous liquid such as water or milk. The final wt% solids is typically at least 20 wt%, such as from 20 wt% to 60 wt%, more preferably from 30 wt% to 50 wt%.

After adding the premix to the aqueous liquid, or vice versa, the mixture is typically stirred to ensure that the premix is thoroughly dispersed. Substantial mechanical action is not required: it is generally sufficient to stir the mixture for less than a minute by hand or using an electrically powered stirrer. Such stirring may introduce small amounts of overrun. However, it is not necessary to use mechanical aeration, i.e. mechanical methods that are intended to introduce substantial amounts of gas into the product, such as whipping.

In a preferred embodiment, the premix is not subjected to mechanical aeration.

Nonetheless, the premixes of the invention may be used in conjunction with methods of making confectionery products where the conventional mechanical aeration techniques used do not introduce sufficient overrun. For example, the premixes of the invention may be used in domestic ice cream makers, to enhance the level of overrun to a more acceptable level. In these cases, some of the overrun is introduced by the gas generated composition, and some by mechanical aeration, such as the action of a domestic ice cream making machine. However, the premix must still be capable, in the absence of, mechanical aeration, of generating at least 30% overrun.

The mixture is stirred, or stirred and then allowed to stand, for a sufficient time to allow the reaction between the acid and the carbonate to generate the desired overrun.

During or after generation of the overrun, the confectionery product may be chilled to a temperature of below about 6°C. If the confectionery product is a frozen confectionery product, then it will be frozen to a temperature of below about -6°C, preferably below -10°C or -15°C. Freezing can be achieved by any suitable means such as in a -18°C freezer. In some embodiments, it may be desirable to use a rapid freezing method such as a brine bath set at a temperature of below -30°C. If used with a domestic ice cream maker, the product will typically freeze during the continuous stirring of the aerated mix.

The premixes of the invention may be packaged for retail or home use.

The present invention will now be further described with reference to the following examples, which are illustrative only.

### Examples 1 to 6 - Aerated ice cream

Materials and methods (Examples 1 to 6)

100g of powder was made up by blending the individual dry powder ingredients together (see table 1 for list of ingredients). 175 g of cold water (10°C or less) was prepared. Half of this was added to the dry ingredients and mixed with a spoon. Once the ingredients were dispersed, the remainder of the cold water was added with further stirring until a homogeneous foamed mix was produced. The total time from initial water addition to completion is about 1 minute.

The pH and overrun of the aerated mix was measured immediately after formation using standard methods.

The aerated mix was then portioned into approximately 5 small plastic containers (roughly 30 to 50 g in each), and then quiescently frozen in a -25°C room.

After 48 hours, the overrun of the ice cream was measured using the Archimedes' principle as described below, and the ice cream was melted and the pH measured at 10°C.

For each example, the process was repeated at least 3 times.

*Determining overrun of a finished product*

The density of a finished ice cream (or other aerated ice confection) product can also be estimated by making use of the Archimedes' principle as described in "A-level Physics", Third Edition, by R. Muncaster, Pub. Stanley Thornes Ltd., Cheltenham, 1989.

First a sample of ice cream is weighed in air to determine its mass. Then the volume of the same sample is determined using the Archimedes' principle as described below. The sample of ice cream is held carefully in a beaker of chilled water just below the surface of the water by a fork (or a knife) inserted into the end of the product. The beaker is placed on a balance throughout the experiment and the increase in weight on immersing the product is recorded. By Archimedes' principle, the increase in weight is equal to the upthrust and hence weight of water displaced. Taking the density of water as 1 $gcm^{-3}$, the weight of water displaced is used to determine the volume of water displaced and thus the volume of ice cream immersed in the beaker. From the mass and volume of the product, the density of the ice cream can be calculated. A minimum of three repeat measurements is taken.

The density of the unaerated mix can either be assumed to be 1.12 $g/cm^3$ or can be estimated by melting the ice cream until the air-phase is lost and then determining the density in an overrun cup at 4°C as described above. With a knowledge of the density of both unaerated mix and aerated ice cream, the overrun can be calculated using the following equation:

$$\text{overrun \%} = \frac{\text{density of mix - density of ice cream}}{\text{density of ice cream}} \times 100$$

Table 1 - formulation ingredients

|  | Example 1 | | Example 2 | | Example 3 | |
|---|---|---|---|---|---|---|
| **Ingredient** | **wt.% (1)** | **wt.% (2)** | **wt.% (1)** | **wt.% (2)** | **wt.% (1)** | **wt.% (2)** |
| Skim Milk Powder | 6.6 | 2.400 | 7.6 | 2.764 | 6.6 | 2.400 |
| Sucrose | 46 | 16.727 | 47.86 | 17.404 | 46 | 16.727 |
| Myvatex Mighty Cream | 38 | 13.818 | 38 | 13.818 | 38 | 13.818 |
| Xanthan Gum | 1 | 0.364 | 1 | 0.364 | 1 | 0.364 |
| k-Carrageenan | 0.11 | 0.040 | 0 | 0.000 | 0.11 | 0.040 |
| Vanillin | 0.04 | 0.015 | 0.04 | 0.015 | 0.04 | 0.015 |
| Acid | 5.5 | 2.000 | 2.75 | 1.000 | 5.5 | 2.000 |
| Base | 2.75 | 1.000 | 2.75 | 1.000 | 2.75 | 1.000 |
|  |  |  |  |  |  |  |
|  | Example 4 | | Example 5 | | Example 6 | |
| **Ingredient** | **wt.% (1)** | **wt.% (2)** | **wt.% (1)** | **wt.% (2)** | **wt.% (1)** | **wt.% (2)** |
| Skim Milk Powder | 6.6 | 2.400 | 7.725 | 2.809 | 6.6 | 2.400 |
| Sucrose | 46 | 16.727 | 49 | 17.818 | 46 | 16.727 |
| Myvatex Mighty Cream* | 38 | 13.818 | 38 | 13.818 | 38 | 13.818 |
| Xanthan Gum | 1 | 0.364 | 1 | 0.364 | 1 | 0.364 |
| k-Carrageenan | 0.11 | 0.040 | 0.11 | 0.040 | 0.11 | 0.040 |
| Vanillin | 0.04 | 0.015 | 0.04 | 0.015 | 0.04 | 0.015 |
| Acid | 5.5 | 2.000 | 1.375 | 0.500 | 5.5 | 2.000 |
| Base | 2.75 | 1.000 | 2.75 | 1.000 | 2.75 | 1.000 |
| Key:<br>wt%(1) = weight percentage of ingredient in the dry powder.<br>wt%(2) = weight percentage of ingredient in the hydrated product.<br>* obtained from Quest International, the 38 wt%(1) consisting of, according to the manufacturer, 24.7 wt% fat minimum, 3.04 wt% protein (whey) minimum, the remainder being made up from mono-/di-glycerides of fatty acids, guar gum, agar and locust bean gum. | | | | | | |

Table 2 - amount of acid and base

|  | Ascorbic Acid (according to the Invention) | | Citric Acid (comparative) | | Sodium Bicarbonate | | Calcium Carbonate | |
|---|---|---|---|---|---|---|---|---|
|  | **A** | **B** | **A** | **B** | **A** | **B** | **A** | **B** |
| **Example 1; Conc. / wt%** | 5.5 | 2 | - | - | 2.75 | 1 | - | - |

(continued)

|  | Ascorbic Acid (according to the Invention) | | Citric Acid (comparative) | | Sodium Bicarbonate | | Calcium Carbonate | |
|---|---|---|---|---|---|---|---|---|
|  | A | B | A | B | A | B | A | B |
| Example 2: Conc. / wt % | 2.75 | 1 | - | - | 2.75 | 1 | - | - |
| Example 3: Conc./wt% | - | - | 5.5 | 2 | 2.75 | 1 | - | - |
| Example 4: Conc./wt % | - | - | 2.75 | 1 | 2.75 | 1 | - | - |
| Example 5: Conc. / wt % | - | - | 1.375 | 0.5 | 2.75 | 1 | - | - |
| Example 6: Conc. / wt % | 5.5 | 2 | - | - | - | - | 2.75 | 1 |
| A = wt% in base powder B = wt.% when aqueous solution added | | | | | | | | |

Results

Table 3 - summary of results

|  | Overrun / % | | pH | |
|---|---|---|---|---|
|  | X | Y | X | Y |
| Example 1: | 101 | 101 | 5.9 | 6.6 |
| Example 2: | 61 | 70 | 6.4 | 7.6 |
| Example 3: (comparative) | 82 | 114 | 3.9 | 4.3 |
| Example 4: (comparative) | 111 | 79 | 5.5 | 5.5 |
| Example 5: (comparative) | 76 | 74 | 6.6 | 8.3 |
| Example 6: | 41 | 66 | 4.1 | 4.5 |
| X = After aeration Y = After freezing | | | | |

Discussion of examples 1 to 6

Example 1: 2% Ascorbic acid and 1% sodium bicarbonate.

A good level of overrun is obtained after aeration (100%) that is maintained through freezing. The pH of the final product is also well above 5.4, ensuring that the ice cream does not taste acidic. The pH measured after melting is greater than that measured immediately after mixing since over time the carbon dioxide will evaporate from solution, reducing the amount of hydrogen ions in solution.

Example 2: 1% Ascorbic acid and 1% sodium bicarbonate.

As the amount of acid is reduced, the level of overrun also decreases and the pH remains high. The overrun in this example is lower than would be preferred, indicating that when using 1% of sodium bicarbonate in the final product, at least 1.5 to 2% ascorbic acid is required to obtain the preferred overrun.

Example 3: 2% Citric acid and 1 % sodium bicarbonate. (comparative)

A good amount of overrun is obtained, measured as 114% after freezing. However, the pH is well below the required threshold of 5.4, leading to a very acidic tasting and fizzy ice cream product which is undesirable. The pH measured after melting is similar to that measured immediately after mixing since although carbon dioxide will evaporate from solution, the citric acid has excess protons, keeping the pH low.

Example 4: 1% Citric acid and 1% sodium bicarbonate. (comparative)

In this case, after freezing and overrun of 79% is achieved. This is an acceptable level of gaseous phase. However, although the pH is also above the required threshold (measured as 5.5 after freezing), this choice of acid and base is not ideal since if a greater degree of overrun was desired, then further addition of citric acid would lead to a pH less than 5.4. Also, small discrepancies in weighing ingredients could lead to a similar result.

Example 5: 0.5% Citric acid and 1% sodium bicarbonate. (comparative)

An acceptable pH is obtained when using this mix, although the overrun in the final product is not as high as preferred. Examples 3 to 5 show that small changes in citric acid concentration have a greater effect on both pH and overrun relative to use of ascorbic acid. Use of 1% sodium bicarbonate with citric acid does not achieve the most preferred overrun and pH of the final aerated product.

Example 6: 2% Ascorbic acid and 1% Calcium Carbonate.

In this example, the overrun is much less than that preferred. This is because calcium carbonate has a low solubility in water compared to sodium bicarbonate. Therefore, the reaction is much slower and does not go through to completion before the product is frozen. Further, the pH remains low since the acid is not all used in reaction. It is clear that choice of base is important to get the rate of reaction optimised.

**Example 7 - Modelled data**

To investigate further the findings shown in examples 1 to 6, a model was developed to enable us to predict the behaviour of different acids in solution with respect to their reaction with a base; the output of the model being the resulting amount of carbon dioxide which is liberated by the reaction and the solution pH. The model assumes the solution is water, which is saturated with carbon dioxide gas. Any carbon dioxide that evolves is therefore liberated immediately as gas, as opposed to dissolving in solution.

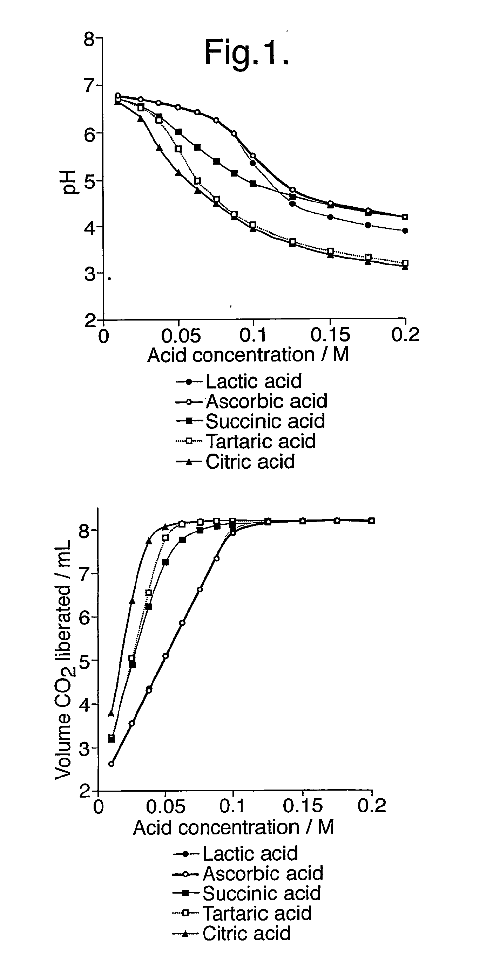

pH values and carbon dioxide volumes as a function of acid type and concentration are shown in figure 1. It is clear that for ascorbic acid (i.e. according to the invention), as a function of concentration, the curves for volume of carbon dioxide produced and the pH are shallow compared to the other di-protic and tri-protic acids plotted.

Citric acid (outside the scope of the invention) has the steepest curve, which means that small changes in acid concentration have a greater effect on pH and volume of carbon dioxide. The curve is particularly steep around the final pH values of 5 and 6, i.e. very small concentration changes will result in a significant pH change. Such dramatic changes are less preferred since control of these parameters is more difficult, and it is therefore more difficult to generate a product that falls inside the desired pH and overrun window, especially when the product is for home use or use by unskilled retailers.

Overall, the pH and volume of carbon dioxide curves for ascorbic acid have a smaller gradient than that of citric acid. Ascorbic acid is a preferred acid since it exhibits both a low pKa and a high pKa (4.17 and 11.57). Di- and tri-protic acids that have pKa values that are all low (< 5) are less preferred since they will exhibit steeper pH and volume carbon dioxide curves.

Table 4: pKa values

| | Acid | MW/g mol$^{-1}$ | pKa |
|---|---|---|---|
| **Monoprotic** | Acetic | 60.05 | 4.756 |
| | Lactic | 90.08 | 3.863 |

|  | (continued) | | |
| --- | --- | --- | --- |
|  | **Acid** | **MW/g mol$^{-1}$** | **pKa** |
|  | Hydrochloric | 36 | -7 |
|  | Gluconic | 196 | 3.86 |
|  | Nitric | 63 | -1,444 |
|  | Mandelic | 152.15 | 3.42 |
|  | Crotonic | 86.09 | 4.69 |
|  | Pyruvic | 88.06 | 2.5 |
| **Diprotic** | Glycine | 75.07 | 2.35, 9.77 |
|  | Succinic | 118.09 | 4.207, 5.636 |
|  | Oxalic | 126.07 | 1.268, 4.282 |
|  | Malic | 134.09 | 3.4, 5.1 |
|  | Tartaric | 150.09 | 3.2, 4.8 |
|  | Ascorbic | 176.13 | 4.17,11.57 |
| **Triprotic** | Citric | 192.13 | 3.13, 4.757, 5.602 |

The various features and embodiments of the present invention, referred to in individual sections above apply, as appropriate, to other sections, *mutatis mutandis.* Consequently features specified in one section may be combined with features specified in other sections, as appropriate.

## Claims

1. A dry confectionery premix for preparing an aerated confectionery product which premix comprises:

   (i) a carbon dioxide generating composition comprising an acid selected from ascorbic acid, succinic acid and mixtures thereof, and a carbonate; wherein the molar ratio of the amount of acid to carbonate present in the carbon dioxide generating composition is from about 1:2 to about 2:1; and
   (ii) a stabiliser;

   such that when the premix is mixed with water to give a final solids content of at least about 20 wt%, an aerated confectionery product is formed, in the absence of mechanical aeration, having an overrun of at least about 30% and a pH of greater than about 5.4.

2. A premix according to claim 1 wherein the carbonate is selected from a metal carbonate and a metal bicarbonate and mixtures thereof.

3. A premix according to claim 1 or claim 2 wherein the carbonate is present in an amount of from about 0.5 wt% to about 3 wt% of the premix.

4. A premix according to any one of the preceding claims wherein the aerated confectionery product formed in the absence of mechanical aeration, has an overrun of at least about 70%.

5. A premix according to any one of the preceding claims wherein the stabiliser is selected from gums, agar, alginates and derivatives thereof, gelatin, pectin, lecithin, sodium carboxymethylcellulose, carrageenan, furcelleran and mixtures thereof.

6. A premix according to any one of the preceding claims which is particulate.

7. A premix according to any one of the preceding claims wherein the confectionery product is a chilled or frozen confectionery product.

8. A premix according to claim 7 wherein the frozen confectionery product is ice cream.

9. Use of a premix according to any one of the preceding claims in a method of preparing a confectionery product having a solids content of at least about 20 wt%, an overrun of at least about 30% and a pH of greater than about 5.4.

10. A method of preparing a confectionery product which method comprises admixing a premix according to any one of claims 1 to 7 with an aqueous liquid to give a final solids content of at least about 20 wt% to form an aerated confectionery product which, in the absence of mechanical aeration, has an overrun of at least about 30% and a pH of greater than about 5.4.

11. A method according to claim 10 wherein the aerated confectionery product has, in the absence of mechanical aeration, an overrun of at least about 70%.

12. A method according to claim 10 or claim 11 which further comprises chilling the confectionery product to a temperature of below about 6°C.

13. A method according to claim 10 or claim 11 which further comprises freezing the confectionery product to a temperature of below about -6°C.

14. A method according to claim 13 wherein the confectionery product is ice cream.


**Patentansprüche**

1. Eine trockene Süßwaren-Vormischung zur Herstellung eines geschäumten Süßwarenproduktes, wobei die Vormischung umfasst:

   (i) eine Kohlendioxid erzeugende Zusammensetzung, die eine Säure, ausgewählt aus Ascorbinsäure, Bernsteinsäure und Gemischen davon, und ein Carbonat umfasst, wobei das Molverhältnis der Menge an Säure zu Carbonat, das in der Kohlendioxid erzeugenden Zusammensetzung vorliegt, von etwa 1:2 bis etwa 2:1 ist, und
   (ii) einen Stabilisator;

   so dass, wenn die Vormischung mit Wasser derart gemischt wird, dass ein Endfeststoffgehalt von wenigstens etwa 20 Gewichts-% erhalten wird, in Abwesenheit einer mechanischen Belüftung ein geschäumtes Süßwarenprodukt gebildet wird, das einen Aufschlag von wenigstens etwa 30 % und einen pH von größer als etwa 5,4 % hat.

2. Vormischung gemäß Anspruch 1, wobei das Carbonat aus einem Metallcarbonat und einem Metallbicarbonat und Gemischen davon ausgewählt ist.

3. Vormischung gemäß Anspruch 1 oder Anspruch 2, wobei das Carbonat in einer Menge von etwa 0,5 Gewichts-% bis etwa 3 Gewichts-% der Vormischung vorliegt.

4. Vormischung gemäß einem der vorangehenden Ansprüche, wobei das geschäumte Süßwarenprodukt, das in Abwesenheit einer mechanischen Belüftung gebildet wird, einen Aufschlag von wenigstens etwa 70 % hat.

5. Vormischung gemäß einem der vorangehenden Ansprüche, wobei der Stabilisator aus Gummen, Agar, Alginaten und Derivaten davon, Gelatine, Pektin, Lecithin, Natriumcarboxymethylcellulose, Carrageenan, Furcelleran und Gemischen davon ausgewählt ist.

6. Vormischung gemäß einem der vorangehenden Ansprüche, die partikulär ist.

7. Vormischung gemäß einem der vorangehenden Ansprüche, wobei das Süßwarenprodukt ein gekühltes oder gefrorenes Süßwarenprodukt ist.

8. Vormischung gemäß Anspruch 7, wobei das gefrorene Süßwarenprodukt Eiscreme ist.

9. Verwendung einer Vormischung gemäß einem der vorangehenden Ansprüche in einem Verfahren zur Herstellung eines Süßwarenproduktes, das einen Feststoffgehalt von wenigstens etwa 20 Gewichts-%, einen Aufschlag von wenigstens etwa 30 % und einen pH von größer als etwa 5,4 hat.

**10.** Verfahren zur Herstellung eines Süßwarenprodukts, wobei das Verfahren umfasst: Vermischen einer Vormischung gemäß einem der Ansprüche 1 bis 7 mit einer wässrigen Flüssigkeit unter Erhalt eines Endfeststoffgehalts von wenigstens etwa 20 Gewichts-%, um ein geschäumtes Süßwarenprodukt zu bilden, welches in Abwesenheit von mechanischer Belüftung einen Aufschlag von wenigstens etwa 30 % und einen pH von höher als 5,4 hat.

**11.** Verfahren gemäß Anspruch 10, wobei das geschäumte Süßwarenprodukt in Abwesenheit einer mechanischen Belüftung einen Aufschlag von wenigstens etwa 70 % hat.

**12.** Verfahren gemäß Anspruch 10 oder Anspruch 11, das außerdem ein Kühlen des Süßwarenprodukts auf eine Temperatur von unter etwa 6 °C umfasst.

**13.** Verfahren gemäß Anspruch 10 oder Anspruch 11, das außerdem ein Gefrieren des Süßwarenprodukts auf eine Temperatur von unter etwa -6 °C umfasst.

**14.** Verfahren gemäß Anspruch 13, wobei das Süßwarenprodukt Eiscreme ist.

## Revendications

**1.** Prémélange de confiserie sec destiné à la préparation d'un produit de confiserie aéré, lequel prémélange continent :

(i) une composition produisant du dioxyde de carbone comprenant un acide choisi parmi l'acide ascorbique, l'acide succinique et leurs mélanges, et un carbonate ; le rapport molaire de la quantité d'acide à la quantité de carbonate présentes dans la composition produisant du dioxyde de carbone se situe entre environ 1:2 et environ 2:1 ; et
(ii) un stabilisant ;

de sorte que lorsque le prémélange est mélangé avec de l'eau de façon que la teneur en solides finale soit d'au moins 20 % en poids environ, un produit de confiserie aéré est formé, en l'absence d'aération mécanique, ayant un foisonnement d'au moins 30 % environ et un pH supérieur à 5,4 environ.

**2.** Prémélange selon la revendication 1 dans lequel le carbonate est choisi parmi un carbonate de métal et un bicarbonate de métal et leurs mélanges.

**3.** Prémélange selon la revendication 1 ou la revendication 2 dans lequel le carbonate est présent en une quantité d'environ 0,5 % en poids à environ 3 % en poids du prémélange.

**4.** Prémélange selon l'une quelconque des revendications précédentes dans lequel le produit de confiserie aéré formé en l'absence d'aération mécanique a un foisonnement d'au moins 70 % environ.

**5.** Prémélange selon l'une quelconque des revendications précédentes dans lequel le stabilisant est choisi parmi les gommes, l'agar-agar, les alginates et leurs dérivés, la gélatine, la pectine, la lécithine, la carboxyméthylcellulose sodique, le carraghénane, le furcellerane, et leurs mélanges.

**6.** Prémélange selon l'une quelconque des revendications précédentes qui est particulaire.

**7.** Prémélange selon l'une quelconque des revendications précédentes dans lequel le produit de confiserie est un produit de confiserie réfrigéré ou congelé.

**8.** Prémélange selon la revendication 7 dans lequel le produit de confiserie congelé est une crème glacée.

**9.** Utilisation d'un prémélange selon l'une quelconque des revendications précédentes dans un procédé de préparation d'un produit de confiserie ayant une teneur en solides d'au moins 20 % en poids environ, un foisonnement d'au moins 30 % environ et un pH supérieur à 5,4 environ.

**10.** Procédé de préparation d'un produit de confiserie qui consiste à mélanger un prémélange selon l'une quelconque des revendications 1 à 7 avec un liquide aqueux de façon à obtenir une teneur en solides finale d'au moins 20 % en poids environ pour former un produit de confiserie aéré qui, en l'absence d'aération mécanique, a un foisonnement d'au moins 30 % environ et un pH supérieur à 5,4 environ.

11. Procédé selon la revendication 10 dans lequel le produit de confiserie aéré a, en l'absence d'aération mécanique, a un foisonnement d'au moins 70 % environ.

12. Procédé selon la revendication 10 ou la revendication 11 qui consiste en outre à réfrigérer le produit de confiserie à une température inférieure à 6°C environ.

13. Procédé selon la revendication 10 ou la revendication 11 qui consiste en outre à congeler le produit de confiserie à une température inférieure à -6°C environ.

14. Procédé selon la revendication 13 dans lequel le produit de confiserie est une crème glacée.

Fig.1.

## REFERENCES CITED IN THE DESCRIPTION

**Patent documents cited in the description**

- WO 0040098 A
- US 5800855 A
- US 4505943 A
- US 2263483 A
- US 3623889 A
- GB 1050213 A

**Non-patent literature cited in the description**

- **Arbuckle.** Ice Cream. Van Nostrand Reinhold Company, 1986
- **R. Muncaster.** A-level Physics. Stanley Thornes Ltd, 1989